(19) Europäisches Patentamt
European Patent Office
Office européen des brevets

(11) **EP 2 963 597 A1**

(12) **EUROPEAN PATENT APPLICATION**

(43) Date of publication:
06.01.2016 Bulletin 2016/01

(51) Int Cl.:
*G06Q 10/06* (2012.01)

(21) Application number: 15174305.1

(22) Date of filing: 29.06.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 30.06.2014 TW 103122582

(71) Applicant: **Chen, Ching-I 112 Taipei City (TW)**

(72) Inventor: **Chen, Ching-I 112 Taipei City (TW)**

(74) Representative: **Lippert, Stachow & Partner Patentanwälte Krenkelstrasse 3 01309 Dresden (DE)**

(54) **A METHOD FOR EVALUATING MANPOWER COST USING AN INFORMATION SYSTEM AND A COMPUTER-READABLE RECORDING MEDIA AND A COMPUTER PROGRAM PRODUCT THEREFOR**

(57) A method for evaluating manpower cost of an employee using an information system is disclosed. By establishing a work dictionary for the employee himself/ herself during a time period based on the job breakdown structure, assigning an attribute for each main operation and considering influences of the internal operation, the data of a percentage of the hour for the sub-item of the SOP operation to the hour for the SOP operation, the data for the overhead hour for the sub-item, and the data for the manpower cost for the sub-item are calculated and stored in a statistical database, and the cost to execute the sub-item is the manpower cost. The method of the present invention can be installed on a computer-readable recording medium and/or a computer program product, and can be executed thereon.

EP 2 963 597 A1

FIG. 1

**Description**

This application claims the benefit of Taiwan Patent Application No. 103122582, filed on June 30, 2014, at the Taiwan Intellectual Property Office, the disclosures of which are incorporated herein in their entirety by reference.

The present invention relates to a method for evaluating a manpower cost. In particular, the present invention relates to a method for evaluating the manpower using a job breakdown structure, a computer-readable recording medium and a computer program product to execute the evaluation method of the manpower.

To measure a product cost, a work performance and the level of resource consumption for management, multiple apportionment bases are adopted at present. All resources and costs are assigned to each product, and the level of resource consumption in each production/delivery stage is controlled. This is not only applicable to the manufacture of products, but also applicable to evaluate the manpower cost of an employee. However, the data for manpower cost are relatively difficult to collect, and cannot reflect the actual indirect cost. Furthermore, the collection of the data for the manpower cost is a tremendous and time-consuming task and consumes substantial organizational resources, and thus such collection may achieve perfection and completeness by contributing to the tremendous amount of resources.

In addition, there is another management method, wherein the level of a unit cost per time regarding supplied resources, consumed resources and output production capabilities are considered. However, this method still focuses on the cost of the individual product without taking account of the relationship between the entire corporation and personal production capabilities, and the types of works an employee does and the ratio of the hours for one type of work to the total work hours are not considered.

It is therefore the Applicant's attempt to deal with the above limitations in the prior art.

To evaluate the relationship between the production capabilities of an entire corporation as well as the individuals in it, in the present invention, the job breakdown structure acts as a template, a work dictionary for an employee during a time period is developed, the attributes for the operations are assigned, and the influence of an internal to a regular operation (or a standard operating procedure (SOP) operation) is considered. The data of a percentage of the hour for sub-items of the SOP operation to the hour for the SOP operation, the data for the overhead hours for the sub-item, and the data for the manpower cost for the sub-items are calculated and stored in a statistical database, and the cost for executing the sub-items is the manpower cost. The method of the present invention can be installed on a computer-readable recording medium and/or a computer program product, and can be executed thereon.

The present invention discloses a method to evaluate a manpower cost using an information system, and includes steps of:

(a) creating a work structure module including a first operation having a first daily hour and L sub-items, and a second operation having a second daily hour, wherein each of the L sub-items has a sub-daily hour for an M-th sub-item, the daily hours for the M-th sub-items are summed up as the first daily hour, and M is an integer from 1 to L;
(b) executing each of the L sub-items in the first operation and the second operation from a first workday to an N-th workday, where N is an integer from 2 to 366;
(c) recording the first daily hour, each of the sub-daily hours for the M-th sub-items and the second daily hour in every workday;
(d) calculating first weekly hours for the first operation, sub-weekly hours for each M-th sub-item and second weekly hours for the second operation based on the first daily hour, each sub-daily hour for the M-th sub-items and the second daily hour in every week from the first workday to the N-th workday, where a total number of weeks is W, and W is an integer of at least 1 and less than 53;
(e) recording the first weekly hours for the first operation, the respective sub-weekly hours for the respective M-th sub-items and the second weekly hours for the second operation in a database by week, summing up the respective first weekly hours for the first operation, the respective sub-weekly hours for the respective M-th sub-items and the respective second weekly hours for the second operation as an annual hour for the first operation, an annual hour for the respective M-th sub-item and an annual hour for the second operation respectively within the W weeks, and calculating total annual hours of operation by summing the annual hours for the first operation and the annual hours for the second operation;
(f) calculating a value of A in a statistical database according to an equation (I):

$$A_M = B_M/C \times 100\% \qquad\qquad \text{equation (I)},$$

where $A_M$ is a percentage of the respective annual hours for each M-th sub-item to the annual hours for the first operation, $B_M$ is the respective annual hours for the respective M-th sub-item, and C is the annual hours for the first operation;

(g) calculating a value of $D_M$ in the statistical database according to an equation (II):

$$D_M = E \times A_M \qquad \text{equation (II),}$$

where $D_M$ is an overhead hour for the respective M-th sub-item, and E is the annual hours for the second operation; and
(h) calculating a value of $F_M$ in an accounting database according to an equation (III):

$$F_M = (B_M + D_M) \times H \qquad \text{equation (III),}$$

where $F_M$ is a cost of the respective M-th sub-item, and H is a unit manpower cost per hour, wherein the cost of the M-th sub-item is a manpower cost.

In some embodiments of the present invention, the first operation is a standard operating procedure, and the second operation is an internal operation.
In some embodiments of the present invention, the first operation is assigned for a work attribute, and the second operation is assigned for an overhead attribute.
In some embodiments of the present invention, the work structure module further includes a third operation assigned for a third attribute, and the first attribute, the second attribute and the third attribute are different from one another.
In some embodiments of the present invention, when the third operation is used to evaluate the manpower cost, the method further includes steps (g1) and (h1) as follows:

(g1) calculating a value of $G_M$ in the statistical database according to an equation (II-1):

$$G_M = J_M \times A_M \qquad \text{equation (II-1),}$$

where $G_M$ is an overhead hour for the M-th sub-item for the third operation, and $J_M$ is annual hours for the third operation; and
(h1) calculating a value of $I_M$ in the accounting database according to an equation (III-1):

$$I_M = (B_M + D_M + G_M) \times H = (B_M + D_M) \times H + G_M \times H = F_M + (G_M \times H)$$

$$\text{equation (III-1),}$$

where $I_M$, the cost of the M-th sub-item, is the manpower cost.

In some embodiments of the present invention, the third attribute is one of a headquarters overhead attribute and a department overhead attribute.
The present invention further provides a method for evaluating a manpower cost using an information system, and includes steps of:

(a) creating a work structure module including a first operation including a first attribute, a first periodic hour and L sub-items, and a second operation including a second attribute and a second periodic hour, each of the L sub-items includes a first sub-periodic hour, the first sub-periodic hours for the L sub-items are summed up as the first periodic hour, and the first attribute is different from the second attribute, where L is an integer no less than 1;
(b) executing the first operation and the second operation within a time period, and recording the first periodic hour and the second periodic hour;
(c) calculating a value of $P_M$ in a statistical database according to an equation (IV):

$$P_M = Q_M/R \times 100\% \qquad \text{equation (IV),}$$

where $P_M$ is a percentage of the first sub-periodic hour for an M-th sub-item to the first periodic hour, $Q_M$ is the first sub-periodic hour for the M-th sub-item, R is the first periodic hour, and M is an integer from 1 to L;

(d) calculating a value of $S_M$ in the statistical database according to an equation (V):

$$S_M = T \times P_M \qquad\qquad \text{equation (V),}$$

where $S_M$ is an overhead hour for the M-th sub-item, and T is the second periodic hour; and

(e) calculating a value of $U_M$ in an accounting database according to an equation (VI):

$$U_M = (Q_M + S_M) \times H \qquad\qquad \text{equation (VI),}$$

where $U_M$ is a cost of the M-th sub-item, and H is a unit manpower cost per hour, wherein the cost of the M-th sub-item is the manpower cost.

In some embodiments of the present invention, the first attribute is a work attribute, the second attribute is an overhead attribute, the work structure module further includes a third operation having a third periodic hour and is assigned for a headquarters attribute, and a fourth operation having a fourth periodic hour and is assigned for a department overhead attribute, and when the third operation and the fourth operation are used to evaluate the manpower cost, the method further includes steps (d1) and (e1) as follows:

(d1) calculating a value of $S_{M,1}$ and a value of $S_{M,2}$ in the statistical database according to an equation (V-1) and an equation (V-2), respectively:

$$S_{M,1} = T_1 \times P_M \qquad\qquad \text{equation (V-1),}$$

and

$$S_{M,2} = T_2 \times P_M \qquad\qquad \text{equation (V-2),}$$

where $S_{M,1}$ is a headquarters overhead hour for the M-th sub-item, $T_1$ is the third periodic hour, $S_{M,2}$ is a department overhead hour for the M-th sub-item, and $T_2$ is the fourth periodic hour; and

(e1) calculating a value of $U_{M,1}$ in the accounting database according to an equation (VI-1):

$$U_{M,1} = (Q_M + S_M + S_{M,1} + S_{M,2}) \times H = (Q_M + S_M) \times H + (S_{M,1} + S_{M,2}) \times H$$
$$= U_M + (S_{M,1} + S_{M,2}) \times H \qquad\qquad \text{equation (VI-1),}$$

where $U_{M,1}$ is the manpower cost of the M-th sub-item.

In some embodiments of the present invention, the first periodic hour and the second periodic hour are summed up as a total periodic hour for operation, and the second periodic hour is decreased when a ratio of the second periodic hour to the total periodic hour for operation is higher than a threshold.

The present invention further discloses a computer program product for evaluating a manpower cost, including:

a work structure module including a first operation having a first attribute, a first periodic hour and L sub-items, and a second operation having a second attribute being different from the first attribute and a second periodic hour, each of M-th sub-items includes a first sub-periodic hour for the M-th sub-item, the periodic hours for the L sub-items are summed up as the first periodic hour, and M is an integer from 1 to L; and

a statistical database configured to record the first periodic hour and the second periodic hour and to store data for a value of $P_M$ calculated according to an equation (IV), a value of $S_M$ calculated according to an equation (V), and a value of $U_M$ calculated according to an equation (VI) as follows after executing the first operation and the second operation during a specific period:

$$P_M = Q_M/R \times 100\% \qquad\qquad \text{equation (IV)},$$

where $P_M$ is a percentage of the first sub-periodic hour for the M-th sub-item to the first periodic hour, $Q_M$ is the first sub-periodic hour for the M-th sub-item, and R is the first periodic hour;

$$S_M = T \times P_M \qquad\qquad \text{equation (V)},$$

where $S_M$ is an overhead hour for the M-th sub-item, and T is the second periodic hour; and

$$U_M = (Q_M + S_M) \times H \qquad\qquad \text{equation (VI)},$$

where $U_M$ is a cost of the M-th sub-item, and H is a unit manpower cost per hour, wherein the cost of the M-th sub-item is the manpower cost.

In some embodiments of the present invention, the first attribute is a work attribute, the second attribute is an overhead attribute, the work structure module further includes a third operation having a third periodic hour and is assigned for a headquarters attribute, and a fourth operation having a fourth periodic hour and is assigned for a department overhead attribute.

In some embodiments of the present invention, when the third operation and the fourth operation are used to evaluate the manpower cost, the statistical database is further configured to record the third periodic hour and the fourth periodic hour, and to store data of a value of $S_{M,1}$ calculated according to an equation (V-1), a value of $S_{M,2}$ calculated according to an equation (V-2), and a value of $U_{M,1}$ calculated according to an equation (VI-1) as follows after executing the third operation and the fourth operation during the specific period:

$$S_{M,1} = T_1 \times P_M \qquad\qquad \text{equation (V-1)},$$

$$S_{M,2} = T_2 \times P_M \qquad\qquad \text{equation (V-2)},$$

and

$$U_{M,1} = (Q_M + S_M + S_{M,1} + S_{M,2}) \times H = (Q_M + S_M) \times H + (S_{M,1} + S_{M,2}) \times H$$
$$= U_M + (S_{M,1} + S_{M,2}) \times H \qquad\qquad \text{equation (VI-1)},$$

where $S_{M,1}$ is a headquarters overhead hour for the M-th sub-item, $T_1$ is the third periodic hour, $S_{M,2}$ is a department overhead hour for the M-th sub-item, $T_2$ is the fourth periodic hour, and $U_{M,1}$ is the manpower cost of the M-th sub-item.

The present invention also discloses a computer-readable recording medium in which the programs are recorded. Any one of the methods and embodiments above can be performed when the computer-readable recording medium is installed on and executed by a computer.

The above objectives and advantages of the present invention will become more readily apparent to those ordinarily skilled in the art after reviewing the following detailed descriptions and accompanying drawings.

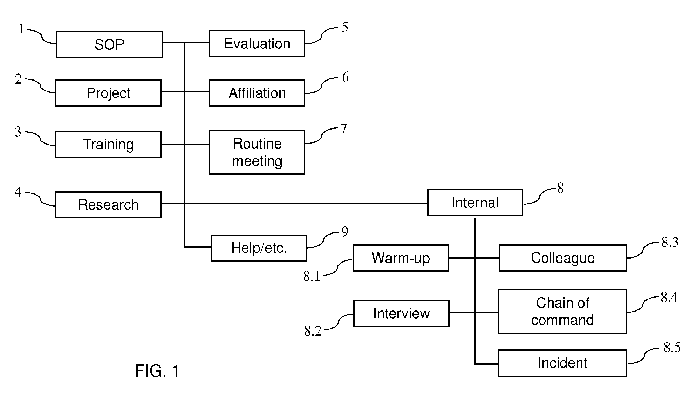

Fig. 1 is a diagram showing a job breakdown structure in an embodiment of the present invention.

The present invention will now be described more specifically with reference to the following embodiments. It is to be noted that the following descriptions of preferred embodiments of this invention are presented herein for purpose of illustration and description only; they are not intended to be exhaustive or to be limited to the precise form disclosed.

To precisely evaluate manpower and avoid the possibility of overestimating or underestimating the manpower in the prior art, a work dictionary structure of an employee in an organization must be first established in the present invention, wherein the organization preferably is a corporation such as a company, a nonprofit organization, a school or the like, the employee preferably is an employee in a cost-based center, an investment-based center, a profit-based center, a production line, a line unit, a profit unit or the like. The employee's jobs during a time period are "deconstructed" as a work dictionary. The time period fits the financial affairs and accounting, can be days, weeks, months, quarters or years, and preferably is one year (or a fiscal year).

Please refer to Fig. 1, which is a diagram showing a job breakdown structure in an embodiment of the present invention. In Fig. 1, the work dictionary structure of an employee is defined or deconstructed as an SOP operation 1, a project 2, a training 3, a research 4, an evaluation 5, an affiliation 6, a routine meeting 7, an internal 8 and a "help/etc." 9, and the internal 8 is further deconstructed as a warm-up 8.1, an interview 8.2 (with an supervisor), a horizontal communication 8.3 (also nominated as "colleague" 8.3), a vertical communication 8.4 (with a subordinate) (also nominated as "chain of command" 8.4) and an incident 8.5. An attribute can be assigned to the main operations of the items 1 to 9. For instance, "a work attribute" is assigned to the SOP 1, "an investment attribute" is assigned to the training 3, "a company overhead (OH) attribute" is assigned to the affiliation 6, "a department OH attribute" is assigned to the routine meeting 7 and the "help/etc." 9, and "an OH attribute" is assigned to the internal 8. The aforementioned work dictionary structure is not limited to the defined or deconstructed main operations of the items 1 to 9, and the sub-items 8.1 to 8.5, and can include other defined or deconstructed main operations and other sub-items. The assigned attributes can be adjusted on demand. By reviewing the present invention, the skilled person in the art can define the work dictionary structure for each employee, modify the order or structure of the work dictionary structure and define the attribute for each of the main operations, and such modification/changes fall within the spirit of the claims of the present invention.

The SOP 1 in the work dictionary structure is also named as the operation for which it is mandated by the management system (or systems), and the SOP 1 can be subdivided into one or more sub-items. Executing the SOP 1 refers to when one or more sub-items are executed, and the total hours for executing the one or more sub-items are the hours for executing the SOP 1. The SOP 1 and its one or more sub-items have the same attribute, such as the work attribute.

The internal 8 in the work dictionary structure is an important item to facilitate the accomplishment of the SOP 1, and acts as a basis for evaluating the indirect cost of the employee's performance in the organization. Furthermore, the internal 8 can be divided into one or more sub-items, such as the sub-items Nos. 8.1, 8.2,... and 8.5. Executing the internal 8 refers to when one or more sub-items are executed, and total hours for executing one or more sub-items are the hours for executing the internal 8. The internal 8 and its one or more sub-items have the same attribute. An OH attribute is assigned to the internal 8 in the embodiments of the present invention.

The duration for evaluating a manpower cost is usually a fiscal year, whereas the duration also can be days, weeks, months or quarters. The days within the fiscal year are 365 or 366 days, and the shortest duration is one day. In the present invention, the employee whose manpower cost is evaluated is one who works in the investment center, the profit center or the cost center in his/her company. The employees described in one embodiment of the present invention are the ones who work in the cost center.

The employee executes each main operation or sub-item according to his/her work dictionary structure, and manually records and accumulates his/her work progresses in a log or a daily database on a 15-minute basis. The time basis is not limited to 15 minutes, and can be 20, 30 or 60 minutes if desired. If the work progresses and time are recorded using an electronic device, the time basis is not limited to 15, 20, 30 or 60 minutes, and one minute can be the time basis. In a first embodiment of the present invention, as shown in Table 1, which is an employee's log dated February 10, 2014, the hour for the sub-item 1.1 is 2.5 hours. The work hours (on a weekly basis) within that week were recorded in the log or the weekly database. As shown in Table 2, which is the employee's log dated from February 10 to 14, 2014, the weekly hours for each main operation, the daily hours for each sub-item, the percentage of the hours for each main operation to the total weekly hours, and the percentage of the hours for each sub-item to the total weekly hours were recorded and calculated.

Table 1

| No. | 8 | | 9 | | | | 10 | | | | 11 | | | | 12 | | | | 1 | | | | 2 | | | | 3 | | | | 4 | | | | 5 | | | | 6 | | | | Time (Hr) |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | 1 | 2 | 3 | 4 | |
| 1.1 | | | O | O | O | O | O | O | O | O | O | O | | | | | | | | | | | | | | | | | | | | | | | | | | | | | | | 2.5 |
| 1.2 | | | | | | | | | | | | | O | O | O | O | O | O | O | O | | | | | | | | | | | | | | | | | | | | | | | 2 |
| 1.3 | | | | | | | | | | | | | | | | | | | | | O | O | O | | | | | | | | | | | | | | | | | | | | 0.75 |
| 1.5 | | | | | | | | | | | | | | | | | | | | | | | | O | O | O | | | | | | | | | | | | | | | | | 0.75 |
| 1.6 | | | | | | | | | | | | | | | | | | | | | | | | | | | O | | | | | | | | | | | | | | | | 0.25 |
| 1.8 | | | | | | | | | | | | | | | | | | | | | | | | | | | | O | | | | | | | | | | | | | | | 0.25 |
| 8.1 | | | | | | | | | | | | | | | | | | | | | | | | | | | | | O | O | O | O | | | | | | | | | | | 1 |
| 9 | | | | | | | | | | | | | | | | | | | | | | | | | | | | | | | | | | | O | O | | | | | | | 0.5 |

Table 2

| Work dictionary structure | Feb. 10 | Feb. 11 | Feb. 12 | Feb. 13 | Feb. 14 | Total | Percentage (%) |
|---|---|---|---|---|---|---|---|
| | MON | TUE | WED | THU | FRI | | |
| 1 | 6.5 | 6 | 6 | 6.25 | 4.75 | 29.5 | 81.38 |
| 1.1 | 2.5 | 1 | 0.5 | 1.5 | | 5.5 | 15.2 |
| 1.2 | 2 | 1.75 | 3 | 0.75 | 3.5 | 11 | 30.3 |
| 1.3 | 0.75 | 0.5 | 0.5 | 1 | 1 | 3.75 | 10.3 |
| 1.4 | | | | | | 0 | 0.0 |
| 1.5 | 0.75 | 0.5 | 1.25 | 1.25 | | 3.75 | 10.3 |
| 1.6 | 0.25 | | | | | 0.25 | 0.7 |
| 1.7 | | | | | | 0 | 0.0 |
| 1.8 | 0.25 | 2.25 | 0.75 | 1.5 | 0.25 | 5 | 13.8 |
| 1.9 | | | | 0.25 | | 0.25 | 0.7 |
| 1.10 | | | | | | 0 | 0.0 |
| 2 | | | | | | 0 | 0.0 |
| 3 | | | | | | 0 | 0.0 |
| 4 | | | 0.25 | 0.75 | | 1 | 2.8 |
| 4.1 | | | | | | 0 | 0.0 |
| 4.2 | | | 0.25 | 0.5 | | 0.75 | 2.1 |
| 4.3 | | | | 0.25 | | 0.25 | 0.7 |
| 5 | | | | | | 0 | 0.0 |
| 6 | | | | | | 0 | 0.0 |
| 7 | | | | | | 0 | 0.0 |
| 8 | 1 | 1 | 0.25 | 0.5 | 0.25 | 3 | 8.28 |
| 8.1 | 1 | 0.5 | 0.25 | 0.5 | 0.25 | 2.5 | 6.9 |
| 8.2 | | | | | | 0 | 0.0 |
| 8.3 | | | | | | 0 | 0.0 |
| 8.4 | | 0.5 | | | | 0.5 | 1.4 |
| 8.5 | | | | | | 0 | 0.0 |
| 8.6 | | | | | | 0 | 0.0 |
| 9 | 0.5 | 1.25 | 0.5 | 0.5 | | 2.75 | 7.6 |
| Total | 8 | 8.25 | 7 | 8 | 5 | 36.25 | 100.0 |

After calculating on a monthly, quarterly or annual basis, the data in the log can be summed, calculated and stored in the monthly log, quarterly log or annual log, which can be incorporated into a statistics database, periodic statistics database, or the equivalent.

In a second embodiment of the present invention, the daily work of a knowledge manager (KM) in a corporation's information technology (IT) department are deconstructed according to his job breakdown structure, and each main operation is assigned for an attribute. After executing for a fiscal year, the hours for each main operation and the hours for each sub-item with regard to this KM within this fiscal year are recorded. Please refer to Table 3, during this fiscal year, the total hours for the sub-items 1.1, 1.2 and 1.3 are 638 hours (=240+238+160), the percentages of the hours for "1. SOP" to the annual total hours and the hours for "1.1 document management" to the annual total hours are 32.03% (=638/1992×100%) and 12.05% (240/1992×100%), respectively. The percentages of the hours for "1.1 document management" to the hours for "1. SOP", the hours for "1.2 file management" to the hours for "1. SOP", and the hours for "1.3 contract management" to the hours for "1. SOP" are 37.62% (=240/638×100%), 37.30% (=238/638×100%) and 25.08% (=160/638×100%), respectively. The data for the other main operations and their sub-items can be calculated according to the aforementioned equations by the skilled person in the art.

Table 3

| Work dictionary - Knowledge manager | Time (Hour) | Percentage (%) | Attribute |
|---|---|---|---|
| 1. Standard operation procedure (SOP) | 638 | 32.03 | Work |
| 1.1 Document management | 240 | 12.05 | 37.62% |
| 1.2 File management | 238 | 11.95 | 37.30% |
| 1.3 Contract management | 160 | 8.03 | 25.08% |
| 2. Project | 73 | 3.66 | Investment |
| 2.1 Internet | 48 | 2.41 | |
| 2.2 The setting to the work flow | 25 | 1.26 | |
| 3. Training | 40 | 2.01 | Investment |
| 3.1 Second party audit | 40 | 2.01 | |
| 4. Research | 354 | 17.77 | Investment |
| 4.1 SOP evolution | 251 | 12.60 | |
| 4.2 Activity-based cost (ABC) model | 44.25 | 2.22 | |
| 4.3 IT Department to-be model | 58.75 | 2.95 | |
| 5. Evaluation | 29.25 | 1.47 | Investment |
| 5.1 WBS project | 24.5 | 1.23 | |
| 5.2 framework model of the integrated information system | 4.75 | 0.24 | |
| 6. Affiliation | 8 | 0.40 | Company OH |
| 6.1 Companywide exercises | 8 | 0.40 | |
| 7. Routine meeting | 320 | 16.06 | Dep. OH |
| 7.1 Department weekly meeting | 200 | 10.04 | |
| 7.2 Maintenance meeting | 120 | 6.02 | |
| 8. Internal | 514.75 | 25.84 | OH |
| 8.1 Warm-up | 350.5 | 17.60 | |
| 8.2 Interview with supervisor | 59.25 | 2.97 | |
| 8.3 Colleague | 75 | 3.77 | |
| 8.4 Chain of command | 12.5 | 0.63 | |
| 8.5 Incident | 12.5 | 0.63 | |
| 8.6 Performance HR | 5 | 0.25 | |
| 9. Help/etc. | 15 | 0.75 | Dep. OH |
| Total | 1992 | 100.00 | |

Because the internal 8 in the work dictionary structure is a key operation to facilitate the accomplishment of SOP 1 and is the basis for evaluating the employee's manpower cost in the organization, the hours for executing the internal 8 and its attribute are used in the cost evaluation of the SOP 1. In other words, to evaluate the costs of SOP 1 and its sub-items, the hours for the internal 8 should be reasonably incorporated with the hours for the SOP 1 and the hours for its sub-items.

Please refer to Table 4, where the results for the hours for the internal 8 and its attribute are used to calculate the cost of SOP 1. There are 193.64 (=514.75×37.62%), 192.02 (=514.75×37.30%) and 129.09 (=514.75×25.08%) hours for the internal 8 (with the OH attribute) used to support the "1.1 document management", "1.2 file management" and "1.3 contract management", respectively (referring to the values in column (b) in Table 4). Therefore, to evaluate the manpower cost of the KM, the times to execute "1.1 document management", "1.2 file management" and "1.3 contract management" are determined as 433.64, 430.02 and 289.09 hours, respectively. Assuming that the KM's gross annual income and annual work hours are NT$1,394,400 and 1,992 hours, the unit manpower cost per hour is NT$700, which is used to evaluate the manpower cost for each sub-item as listed in the column (d) in Table 4.

Table 4

| 1. SOP | Time (Hour) | | | Manpower cost (Dollar) (d) |
|---|---|---|---|---|
|  | Work attribute (a) | OH attribute (b) | Total (c = a+b) |  |
| 1.1 Document management | 240 | 193.64 | 433.64 | 303,548 |
| 1.2 File management | 238 | 192.02 | 430.02 | 301,014 |
| 1.3 Contract management | 160 | 129.09 | 289.09 | 202,363 |
| Total |  |  | 1152.75 | 806,925 |
| * value (d) = value (c) × unit manpower cost per hour | | | | |

In the second embodiment of the present invention, if the costs for executing the SOP 1 and its sub-items are borne by the company and its department, the company OH, the department OH and the OH in Table 3 should be considered to evaluate the manpower cost and the performance evaluation. Please refer to Table 5, where the results of the cost evaluation, wherein the hours and the attributes for the affiliation 6, the routine meeting 7, the internal 8 and the "help/etc." 9 are incorporated into the cost evaluation for the SOP 1. There are 193.64, 192.02 and 129.09 hours in the internal 8 (with the OH attribute) used to support the sub-items 1.1, 1.2 and 1.3 respectively (referring to the values in column (b) in Table 5), there are 3.01, 2.98 and 2.01 hours in the affiliation 6 (with the company OH attribute) used therefor (referring to the values in column (c) in Table 5), and there are 126.02, 124.97 and 84.01 hours in the routine meeting 7 and the "help/etc." 9 (with the department OH attribute) used therefor (referring to the values in column (d) in Table 5). Subsequently, the manpower cost of each sub-item of the KM is evaluated using NT$700 of the unit manpower cost per hour.

Table 5

| 1. SOP | Time (Hour) | | | | | Manpower cost (Dollar) (f) |
|---|---|---|---|---|---|---|
|  | Work attribute (a) | OH attribute (b) | Company OH attribute (c) | Department OH attribute (d) | Total (e) |  |
| 1.1 Document management | 240 | 193.64 | 3.01 | 126.02 | 562.67 | 393,869 |
| 1.2 File management | 238 | 192.02 | 2.98 | 124.97 | 557.97 | 390,579 |
| 1.3 Contract management | 160 | 129.09 | 2.01 | 84.01 | 375.11 | 262,577 |
| Total |  |  |  |  | 1495.75 | 1,047,025 |
| * (c) = hour for affiliation 6 × the percentage of hour for sub-item in SOP 1 to the hour for SOP 1 <br> ** (d) = (hour for routine meeting 7 + hour for "help/etc." 9) × the percentage of hour for sub-item in SOP 1 to the hour for SOP 1 <br> *** (e) = (a) + (b) + (c) + (d) <br> **** (f) = (e) × unit manpower cost per hour | | | | | | |

In the second embodiment of the present invention, after the calculations from the data and the manpower costs in Tables 3 and 4 (or 5) are completed, the manpower input and the productivity output are evaluated as the KM's manpower assessment. In Table 3, the OH attribute of the internal 8 can be considered to calculate and evaluate the manpower cost. In Table 4, in addition to the OH attribute for the internal 8, the company OH attributes of the affiliation 6 and the routine meeting 7, and the department OH attribute of the "help/etc." 9 are considered. The manpower cost and the performance evaluation also can be determined by the skilled person in the art when considering the attributes of other main operations. The company and its department can also evaluate the cost that it should bear according to Table 4. To reduce the texts, the log is not disclosed in the second embodiment of the present invention as shown in Tables 1 and 2. The job breakdown structure can also be recorded in the work structure module by the skilled person in the art with reference to the context, and Tables 1 to 5 can be incorporated into a periodic statistics database or an accounting database.

Overestimation or underestimation does not occur in the evaluation results of the manpower cost in the second embodiment of the present invention compared to the prior art. The hours for annual work and the annual manpower gross are considered in the cost evaluation of the prior art. If the data in the second embodiment of the present invention are used by the prior art 1, the unit manpower cost per hour in the prior art 1 is NT$700. The evaluation cost in the prior art 1 is calculated by multiplying the hours for the SOP by the unit manpower cost per hour, and over- or under-estimation is determined by subtracting the manpower cost in the present invention from the evaluation cost in the prior art 1. It can be seen from Table 6 that underestimation occurs using the evaluation cost in the prior art 1. Furthermore, the work in the SOP and the annual manpower gross cost are only considered by the cost evaluation in the prior art 2. If the data in the second embodiment of the present invention are used by the prior art 2, the unit manpower cost per hour in the prior art 2 is NT$2,186 (=NT$1,394,400/638). Similarly, the evaluation cost in the prior art 2 is calculated by multiplying the hours for the SOP by the unit manpower cost per hour, and over- or under-estimation is determined by subtracting the manpower cost in the present invention from the evaluation cost in the prior art 2. It can be seen from Table 7 that overestimation occurs using the evaluation cost in the prior art 2. Accordingly, the manpower cost evaluated in the second embodiment of the present invention does not result in either overestimating or underestimating the cost.

Table 6

| 1. SOP | Evaluation in the prior art 1 | | Manpower cost in the present invention (Dollar) (f) | Difference (Dollar) (g) |
|---|---|---|---|---|
| | Time (hour) | Cost (dollar) (a) | | |
| 1.1 Document management | 240 | 168,000 | 393,869 | -225,869 |
| 1.2 File management | 238 | 166,600 | 390,579 | -223,979 |
| 1.3 Contract management | 160 | 112,000 | 262,577 | -150,577 |
| Total | 638 | 446,600 | 1,047,025 | -600,425 |

\* (a) = hours for sub-item in SOP 1 × unit manpower cost per hour (NT$700)

\*\* (f) is the same as the values in column (f) in Table 5

\*\*\* (g) = (a) - (f)

Table 7

| 1. SOP | Evaluation in the prior art 2 | | Manpower cost in the present invention (Dollar) (f) | Difference (Dollar) (g) |
|---|---|---|---|---|
| | Time (hour) | Cost (dollar) (a) | | |
| 1.1 Document management | 240 | 524,640 | 393,869 | 130,771 |
| 1.2 File management | 238 | 520,268 | 390,579 | 129,689 |
| 1.3 Contract management | 160 | 349,760 | 262,577 | 87,183 |

(continued)

| 1. SOP | Evaluation in the prior art 2 | | Manpower cost in the present invention (Dollar) (f) | Difference (Dollar) (g) |
|---|---|---|---|---|
| | Time (hour) | Cost (dollar) (a) | | |
| Total | 638 | 1,394,668 | 1,047,025 | 347,643 |
| * (a) = hours for sub-item in SOP 1 × unit manpower cost per hour (NT$2,186) <br> ** (f) is the same as the values in column (f) in Table 5 <br> *** (g) = (a) - (f) | | | | |

In the third embodiment, a clerk's daily work in a company is deconstructed according to the job breakdown structure and executed for one fiscal year. Please refer to Table 8, during this fiscal year, the percentages of the hours for "1.1 SiS form application" to the hours for SOP 1, the hours for "1.2 equipment purchase" to the hours for SOP 1, and the hours for "1.3 assistance for conference" to the hours for SOP 1 are 21.21% (=333.25/1580.25×100%), 41.62% (657.75/1580.25×100%) and 37.16% (587.25/1580.25×100%), respectively.

Table 8

| Work dictionary - Clerk | Time (Hour) | Percentage (%) | Attribute |
|---|---|---|---|
| 1. Standard operation procedure (SOP) | 1580.25 | 77.01 | Work |
| 1.1 SiS form application | 335.25 | 16.34 | 21.21% |
| 1.2 Equipment purchase | 657.75 | 32.05 | 41.62% |
| 1.3 Assistance for conference | 587.25 | 28.62 | 37.16% |
| 2. Project | | | |
| 3.Training | 79.75 | 3.89 | Investment |
| 3.1 Second party audit | 31.75 | 1.55 | |
| 3.2 Project management | 32 | 1.56 | |
| 3.3 Purchase management | 16 | 0.78 | |
| 4. Research | | | |
| 5. Evaluation | | | |
| 6. Affiliation | 8 | 0.39 | Company OH |
| 6.1 Companywide exercises | 8 | 0.39 | |
| 7. Routine meeting | 150 | 7.31 | Dep. OH |
| 7.1 Department weekly meeting | 150 | 7.31 | |
| 8. Internal | 195 | 9.50 | OH |
| 8.1 Warm-up | 125 | 6.09 | |
| 8.2 Interview with supervisor | 10 | 0.49 | |
| 8.3 Colleague | 25 | 1.22 | |
| 8.4 Chain of command | 15 | 0.73 | |
| 8.5 Incident | 18 | 0.88 | |
| 8.6 Performance HR | 2 | 0.10 | |
| 9. Help/etc. | 39 | 1.90 | Dep. OH |
| Total | 2052 | 100.00 | |

Please refer to Table 9, when is the results that the hours for the internal 8 and its attribute are used to calculate the cost of SOP 1. There are 41.37 (=195x21.21%), 81.17 (=195×41.62%) and 72.47 (=195×37.16%) hours in the internal 8 (with the OH attribute) used to support the "1.1 SiS form application", "1.2 equipment purchase" and "1.3 assistance for conference", respectively (referring to the values in column (b) in Table 9). Therefore, to evaluate the manpower cost of the clerk, the time to execute the sub-items 1.1, 1.2 and 1.3 is determined as 376.62, 738.92 and 659.72 hours, respectively. Assuming that the clerk's gross annual income and annual work hours are NT$615,600 and 2,052 hours, the unit manpower cost per hour is NT$300, which is used to evaluate the manpower cost for each sub-item as listed in column (d) in Table 9.

Table 9

| 1. SOP | Time (Hour) | | | Manpower cost (Dollar) (d) |
|---|---|---|---|---|
| | Work cttribute (a) | OH attribute (b) | Total (c= a+b) | |
| 1.1 SiS form application | 335.25 | 41.37 | 376.62 | 112,986 |
| 1.2 Equipment purchase | 657.75 | 81.17 | 738.92 | 221,676 |
| 1.3 Assistance for conference | 587.25 | 72.47 | 659.72 | 197,916 |
| Total | | | 1152.75 | 1775.26 |
| * (d) = (c) × unit manpower cost per hour | | | | |

In the third embodiment of the present invention, if the cost for executing the SOP 1 and its sub-items are borne by the company and its department, the company OH, the department OH and the OH in Table 8 should be taken into account to evaluate the manpower cost and the performance evaluation. Please refer to Table 10, which show the results of the cost evaluation, wherein the hours and the attributes for the affiliation 6, the routine meeting 7, the internal 8 and the "help/etc." 9 are incorporated into the cost evaluation for the SOP 1. The manpower cost to execute "1.1 SiS form application", "1.2 equipment purchase" and "1.3 assistance for conference" are NT$125,526, 246,276 and 219,879, respectively.

Table 10

| 1. SOP | Time for Manpower Cost (Hour) | | | | | Manpower cost (Dollar) (f) |
|---|---|---|---|---|---|---|
| | Work attribute (a) | OH attribute (b) | Company OH attribute (c) | Department OH attribute (d) | Total (e) | |
| 1.1 SiS form application | 335.25 | 41.37 | 1.7 | 40.1 | 418.42 | 125,526 |
| 1.2 Equipment purchase | 657.75 | 81.17 | 3.33 | 78.67 | 820.92 | 246,276 |
| 1.3 Assistance for conference | 587.25 | 72.47 | 2.97 | 70.24 | 732.93 | 219,879 |
| Total | | | | | 1972.27 | 591,681 |
| * (c) = hour for affiliation 6 × the percentage of hour for sub-item in SOP 1 to the hour for SOP 1 ** (d) = (hour for routine meeting 7 + hour for "help/etc." 9) × the percentage of hour for sub-item in SOP 1 to the hour for SOP 1 *** (e) = (a) + (b) + (c) + (d) **** (f) = (e) × unit manpower cost per hour | | | | | | |

Similarly, overestimation or underestimation does not occur in the evaluation results of the manpower cost in the third embodiment of the present invention compared to the prior art. The cost evaluation method of the prior art 1 shown in Table 11 is the same as that shown in Table 6, and the cost evaluation method of the prior art 2 in Table 12 is the same as that shown in Table 7. If the data in the third embodiment of the present invention are used by the prior art 1, the unit manpower cost per hour in the prior art 1 is NT$300. It can be seen from Table 11 that underestimation occurs using the evaluation cost in the prior art 1. If the data in the third embodiment of the present invention are used by the prior art 2, the unit manpower cost per hour in the prior art 2 is about NT$390 (=NT$615,600/1580.25). It can be seen from Table 12 that overestimation occurs using the evaluation cost in the prior art 2. Accordingly, the manpower cost evaluated in the third embodiment of the present invention does not result in overestimating or underestimating the cost.

Table 11

| 1. SOP | Evaluation in the prior art 1 | | Manpower cost in the present invention (Dollar) (f) | Difference (Dollar) (g) |
|---|---|---|---|---|
| | Time (hour) | Cost (dollar) (a) | | |
| 1.1 SiS form application | 335.25 | 100,575 | 125,526 | -24,951 |
| 1.2 Equipment purchase | 657.75 | 197,325 | 246,276 | -48,951 |
| 1.3 Assistance for conference | 587.25 | 176,175 | 219,879 | -43,704 |
| Total | 1580.25 | 474,075 | 591,681 | -117,606 |
| * (a) = hours for sub-item in SOP 1 × unit manpower cost per hour (NT$700) ** (f) is the same as the values in column (f) in Table 5 *** (g) = (a) - (f) | | | | |

Table 12

| 1. SOP | Evaluation in the prior art 2 | | Manpower cost in the present invention (Dollar) (f) | Difference (Dollar) (g) |
|---|---|---|---|---|
| | Time (hour) | Cost (dollar) (a) | | |
| 1.1 SiS form application | 335.25 | 130,748 | 125,526 | 5,222 |
| 1.2 Equipment purchase | 657.75 | 256,523 | 246,276 | 10,247 |
| 1.3 Assistance for conference | 587.25 | 229,028 | 219,879 | 9,149 |
| Total | 1580.25 | 616,298 | 591,681 | 24,617 |
| * value (a) = hours for sub-item in SOP 1 × unit manpower cost per hour (NT$2,186) ** value (f) is the same as the values in column (f) in Table 5 *** value (g) = value (a) - value (f) | | | | |

In the third embodiment, the manpower cost will be overestimated and is unable to concisely assess the employee if the hours for the internal 8 and the "help/etc." 9 in Table 6 are above a threshold or a relative ratio. Therefore, the hours for the internal 8 and the "help/etc." 9 should be reviewed and decreased when the ratio of the hours for the internal 8 (and the "help/etc." 9) to the total work hours is higher than a threshold or a relative ratio.

The method of the present invention can be installed on a computer-readable recording medium and/or a computer program product, and is executed thereon. The computer-readable recording medium includes but is not limited to a computer software or a hard disc or a floppy disc, CD-ROM, DVD, DVD-R, DVD+R, DVD-RW, DVD+RW, BD, Blu-ray® disc, flash, radio-frequency identification (RFID) and the like. The computer program product includes but is not limited to a computer product such as a server, a desktop, a notebook, a Macintosh computer, a tablet, a barebones computer, a palm, a netbook, an optic-disc readable device, a USB readable device, a near field communication (NFC) device and the like.

For instance, a computer program product, software or an information system including the evaluation method of the manpower cost in the present invention is installed in the operating system of the hard disk of the computer. In this information system, a work structure module (including the main operations such as those in Fig. 1, in the second or third embodiment, and L sub-items) for an employee should be established first. Each main operation is assigned with an attribute, and the first main operation has an attribute different from that of the second main operation. Preferably, the first operation is assigned for a work attribute, and the second operation is assigned for an OH attribute. Next, a periodic statistical database is established in the information system to record the hours for the main operations and the hours for the sub-items and store the data for a value of $P_M$ calculated according to an equation (IV), a value of $S_M$ calculated according to an equation (V), and a value of $U_M$ calculated according to an equation (VI) as follows after executing the first operation and the second operation during a specific period:

$$P_M = Q_M/R \times 100\% \qquad \text{equation (IV),}$$

where $P_M$ is a percentage of the first sub-periodic hour for the M-th sub-item to the first periodic hour, $Q_M$ is the first sub-periodic hour for the M-th sub-item, and R is the first periodic hour;

$$S_M = T \times P_M \qquad \text{equation (V),}$$

where $S_M$ is an overhead hour for the M-th sub-item, and T is the second periodic hour; and

$$U_M = (Q_M + S_M) \times H \qquad \text{equation (VI),}$$

where $U_M$ is a cost of the M-th sub-item, and H is a unit manpower cost per hour. The cost of the M-th sub-item is the manpower cost.

In this information system, when other main operations (such as a third operation having a company OH attribute and a fourth operation having a department OH attribute) are used to evaluate the manpower cost, the statistical database is further configured to record the third periodic hour and the fourth periodic hour, and to store data for a value of $S_{M,1}$ calculated according to an equation (V-1), a value of $S_{M,2}$ calculated according to an equation (V-2), and a value of $U_{M,1}$ calculated according to an equation (VI-1) as follows the execution of the third operation and the fourth operation during the specific period:

$$S_{M,1} = T_1 \times P_M \qquad \text{equation (V-1),}$$

$$S_{M,2} = T_2 \times P_M \qquad \text{equation (V-2),}$$

and

$$U_{M,1} = U_M + (S_{M,1} + S_{M,2}) \times H \qquad \text{equation (VI-1),}$$

where $S_{M,1}$ is a headquarters overhead hour for the M-th sub-item, $T_1$ is the third periodic hour, $S_{M,2}$ is a department overhead hour for the M-th sub-item, $T_2$ is the fourth periodic hour, and $U_{M,1}$ is the manpower cost of the M-th sub-item.

In this information system, the equations (IV), (V), (V-1) and (V-2) and (VI-1) are executed and the data after execution are stored, and the data following the execution of the equation (V-2) is used to evaluate the manpower cost of the employee.

While the invention has been described in terms of what is presently considered to be the most practical and preferred Embodiments, it is to be understood that the invention needs not be limited to the disclosed Embodiments. On the contrary, it is intended to cover various modifications and similar arrangements included within the spirit and scope of the appended claims, which are to be accorded with the broadest interpretation so as to encompass all such modifications and similar structures.

**Claims**

1. A method for evaluating a manpower cost using an information system, **characterized by** comprising steps of:

(a) creating a work structure module comprising a first operation including a first attribute, a first periodic hour and L sub-items, and a second operation including a second attribute and a second periodic hour, each of the L sub-items includes a first sub-periodic hour, the first sub-periodic hours for the L sub-items are summed up as the first periodic hour, and the first attribute is different from the second attribute, where L is an integer no less than 1;

(b) executing the first operation and the second operation within a time period, and recording the first periodic hour and the second periodic hour;

(c) calculating a value of $P_M$ in a statistical database according to an equation (IV):

$$P_M = Q_M/R \times 100\% \qquad \text{equation (IV)},$$

where $P_M$ is a percentage of the first sub-periodic hour for an M-th sub-item to the first periodic hour, $Q_M$ is the first sub-periodic hour for the M-th sub-item, R is the first periodic hour, and M is an integer from 1 to L;

(d) calculating a value of $S_M$ in the statistical database according to an equation (V):

$$S_M = T \times P_M \qquad \text{equation (V)},$$

where $S_M$ is an overhead hour for the M-th sub-item, and T is the second periodic hour; and

(e) calculating a value of $U_M$ in an accounting database according to an equation (VI):

$$U_M = (Q_M + S_M) \times H \qquad \text{equation (VI)},$$

where $U_M$ is a cost of the M-th sub-item, and H is a unit manpower cost per hour, wherein the cost of the M-th sub-item is the manpower cost.

2. The method according to Claim 1, **characterized in that** the first attribute is a work attribute, the second attribute is an overhead attribute, the work structure module further comprises a third operation having a third periodic hour and is assigned for a headquarters attribute, and a fourth operation having a fourth periodic hour and is assigned for a department overhead attribute, and when the third operation and the fourth operation are used to evaluate the manpower cost, the method further comprises steps (d1) and (e1) as follows:

(d1) calculating a value of $S_{M,1}$ and a value of $S_{M,2}$ in the statistical database according to an equation (V-1) and an equation (V-2), respectively:

$$S_{M,1} = T_1 \times P_M \qquad \text{equation (V-1)},$$

and

$$S_{M,2} = T_2 \times P_M \qquad \text{equation (V-2)},$$

where $S_{M,1}$ is a headquarters overhead hour for the M-th sub-item, $T_1$ is the third periodic hour, $S_{M,2}$ is a department overhead hour for the M-th sub-item, and $T_2$ is the fourth periodic hour; and

(e1) calculating a value of $U_{M,1}$ in the accounting database according to an equation (VI-1):

$$U_{M,1} = U_M + (S_{M,1} + S_{M,2}) \times H \qquad \text{equation (VI-1)},$$

where $U_{M,1}$ is the manpower cost of the M-th sub-item.

3. The method according to Claim 2, **characterized in that** the first periodic hour and the second periodic hour are summed up as a total periodic hour for operation, and the second periodic hour is decreased when a ratio of the second periodic hour to the total periodic hour for operation is higher than a threshold.

4. The method according to Claim 1, **characterized in that** the first periodic hour includes a first daily hour, a first weekly hour and a first annual hour, the second periodic hour includes a second daily hour, a second weekly hour and a second annual hour, the first sub-periodic hour includes a sub-daily hour for the M-th sub-item and a sub-weekly hour for the M-th sub-item, the sub-daily hours for the L sub-items are summed up as the first daily hour, the time period is set from a first workday to an N-th workday, where N is an integer from 2 to 366, and the method further comprises steps (b1) to (b4) of:

(b1) executing each of the L sub-items in the first operation and the second operation from the first workday to the N-th workday;
(b2) recording the first daily hour, each of the sub-daily hours for the M-th sub-items and the second daily hour in every workday;
(b3) calculating first weekly hours for the first operation, sub-weekly hours for each M-th sub-item and second weekly hours for the second operation respectively based on the first daily hour, each sub-daily hour for the M-th sub-items and the second daily hour in every week from the first workday to the N-th workday, where a total number of weeks is W, and W is an integer of at least 1 and less than 53; and
(b4) recording the first weekly hours for the first operation, the respective sub-weekly hours for the respective M-th sub-items and the second weekly hours for the second operation in a database by week, summing up the respective first weekly hours for the first operation, the respective sub-weekly hours for the respective M-th sub-items and the respective second weekly hours for the second operation as an annual hour for the first operation, an annual hour for the respective M-th sub-item and an annual hour for the second operation respectively within the W weeks, and calculating total annual hours for operation by summing the annual hours for the first operation and the annual hours for the second operation.

**5.** The method according to Claim 4, **characterized in that** the method further comprises steps (c1), (d1) and (e1) as follows:

(c1) calculating a value of A in the statistical database according to an equation (I):

$$A_M = B_M/C \times 100\% \qquad\qquad \text{equation (I)},$$

where $A_M$ is a percentage of the respective annual hours for each M-th sub-item to the annual hours for the first operation, $B_M$ is the respective annual hours for the respective M-th sub-item, and C is the annual hours for the first operation;
(d1) calculating a value of $D_M$ in the statistical database according to an equation (II):

$$D_M = E \times A_M \qquad\qquad \text{equation (II)},$$

where $D_M$ is an overhead hour for the respective M-th sub-item, and E is the annual hours for the second operation; and
(e1) calculating a value of $F_M$ in an accounting database according to an equation (III):

$$F_M = (B_M + D_M) \times H \qquad\qquad \text{equation (III)},$$

where $F_M$ is a cost of the respective M-th sub-item, and H is a unit manpower cost per hour, wherein the cost of the M-th sub-item refers to a manpower cost.

**6.** The method according to Claim 5, **characterized in that** the first operation is a standard operating procedure, and the second operation is an internal operation.

**7.** The method according to Claim 5, **characterized in that** the first operation is assigned for a work attribute, and the second operation is assigned for an overhead attribute.

**8.** The method according to Claim 5, **characterized in that** the work structure module further comprises a third operation assigned for a third attribute, and the first attribute, the second attribute and the third attribute are different from one another.

9. The method according to Claim 8, **characterized in that** when the third operation is used to evaluate the manpower cost, the method further comprising steps (d2) and (e2) as follows:

(d2) calculating a value of $G_M$ in the statistical database according to an equation (II-1):

$$G_M = J_M \times A_M \qquad \text{equation (II-1)},$$

where $G_M$ is an overhead hour for the M-th sub-item for the third operation, and $J_M$ is annual hours for the third operation; and
(e2) calculating a value of $I_M$ in the accounting database according to an equation (III-1):

$$I_M = F_M + (G_M \times H) \qquad \text{equation (III-1)},$$

where $I_M$ is the cost of the M-th sub-item being the manpower cost.

10. The method according to Claim 8, **characterized in that** the third attribute is one of a headquarters overhead attribute and a department overhead attribute.

11. A computer program product for evaluating a manpower cost, **characterized by** comprising:

a work structure module including a first operation having a first attribute, a first periodic hour and L sub-items, and a second operation having a second attribute being different from the first attribute and a second periodic hour, each of the M-th sub-items includes a first sub-periodic hour for the M-th sub-item, the periodic hours for the L sub-items are summed up as the first periodic hour, and M is an integer from 1 to L; and
a statistical database configured to record the first periodic hour and the second periodic hour and to store data of a value of $P_M$ calculated according to an equation (IV), a value of $S_M$ calculated according to an equation (V), and a value of $U_M$ calculated according to an equation (VI) as follows after executing the first operation and the second operation during a specific period:

$$P_M = Q_M/R \times 100\% \qquad \text{equation (IV)},$$

where $P_M$ is a percentage of the first sub-periodic hour for the M-th sub-item to the first periodic hour, $Q_M$ is the first sub-periodic hour for the M-th sub-item, and R is the first periodic hour;

$$S_M = T \times P_M \qquad \text{equation (V)},$$

where $S_M$ is an overhead hour for the M-th sub-item, and T is the second periodic hour; and

$$U_M = (Q_M + S_M) \times H \qquad \text{equation (VI)},$$

where $U_M$ is a cost of the M-th sub-item, and H is a unit manpower cost per hour, wherein the cost of the M-th sub-item is the manpower cost.

12. The computer program product according to Claim 11, **characterized in that** the first attribute is a work attribute, the second attribute is an overhead attribute, the work structure module further comprises a third operation having a third periodic hour and is assigned for a headquarters attribute, and a fourth operation having a fourth periodic hour and is assigned for a department overhead attribute.

13. The computer program product according to Claim 12, **characterized in that** when the third operation and the fourth operation are used to evaluate the manpower cost, the statistical database is further configured to record the third periodic hour and the fourth periodic hour, and to store data of a value of $S_{M,1}$ calculated according to an equation (V-1), a value of $S_{M,2}$ calculated according to an equation (V-2), and a value of $U_{M,1}$ calculated according to an equation (VI-1) as follows after executing the third operation and the fourth operation during the specific period:

$$S_{M,1} = T_1 \times P_M \qquad\qquad \text{equation (V-1),}$$

$$S_{M,2} = T_2 \times P_M \qquad\qquad \text{equation (V-2),}$$

and

$$U_{M,1} = U_M + (S_{M,1} + S_{M,2}) \times H \qquad\qquad \text{equation (VI-1),}$$

where $S_{M,1}$ is a headquarters overhead hour for the M-th sub-item, $T_1$ is the third periodic hour, $S_{M,2}$ is a department overhead hour for the M-th sub-item, $T_2$ is the fourth periodic hour, and $U_{M,1}$ is the manpower cost of the M-th sub-item.

1 — SOP     Evaluation — 5

2 — Project     Affiliation — 6

3 — Training     Routine meeting — 7

4 — Research     Internal — 8

9 — Help/etc.

Warm-up    8.1     Colleague — 8.3

Interview    8.2     Chain of command — 8.4

Incident — 8.5

FIG. 1

Europäisches
Patentamt

European
Patent Office

Office européen
des brevets

# EUROPEAN SEARCH REPORT

Application Number

EP 15 17 4305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Anonymous: "Statistical database - Wikipedia, the free encyclopedia", , 26 May 2013 (2013-05-26), XP055207311, Retrieved from the Internet: URL:https://en.wikipedia.org/w/index.php?title=Statistical_database&oldid=556850324 [retrieved on 2015-08-11] * the whole document * | 1-13 | INV. G06Q10/06 |
| X | US 7 778 849 B1 (HUTTON KEVIN C [US] ET AL) 17 August 2010 (2010-08-17) * column 4, line 31 - line 47 * | 1-13 | |

-----

-----

TECHNICAL FIELDS
SEARCHED        (IPC)

G06Q

The present search report has been drawn up for all claims

| Place of search | Date of completion of the search | Examiner |
|---|---|---|
| Munich | 14 August 2015 | Bîrlescu, V |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 15 17 4305

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2015

| Patent document cited in search report | Publication date | Patent family member(s) | Publication date |
|---|---|---|---|
| US 7778849 B1 | 17-08-2010 | NONE | |

For more details about this annex : see Official Journal of the European Patent Office, No. 12/82

EPO FORM P0459

**EP 2 963 597 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 103122582